**Europäisches Patentamt**

**European Patent Office**

**Office européen des brevets**

(19)

(11) **EP 1 429 474 A2**

(12) **EUROPEAN PATENT APPLICATION**

(43) Date of publication:
**16.06.2004 Bulletin 2004/25**

(51) Int Cl.⁷: **H04B 7/212**

(21) Application number: **04000663.7**

(22) Date of filing: **18.05.1999**

| | |
|---|---|
| (84) Designated Contracting States:<br>**DE DK FR GB NL**<br><br>(30) Priority: **20.05.1998 GB 9810883**<br><br>(62) Document number(s) of the earlier application(s) in accordance with Art. 76 EPC:<br>**99922346.4 / 1 013 005**<br><br>(71) Applicant: **Inmarsat Ltd.**<br>**London EC1Y 1AX (GB)**<br><br>(72) Inventors:<br>• **Phillips, Kevin Paul**<br>**Essex SS9 1RR (GB)** | • **Febvre, Paul Roger**<br>**Suffolk IP4 5HF (GB)**<br><br>(74) Representative:<br>**Cross, James Peter Archibald et al**<br>**R.G.C. Jenkins & Co.,**<br>**26 Caxton Street**<br>**London SW1H 0RJ (GB)**<br><br>Remarks:<br>This application was filed on 15 - 01 - 2004 as a divisional application to the application mentioned under INID code 62. |

(54) **Satellite communication method and apparatus**

(57) A satellite messaging system has at least one earth station (2) which sends messages to mobile terminals (6) either on a TDM channels (T) or a to-mobile messaging channel $M_F$, dependent on the length of the message. Messages are formatted into a variable number of frames each containing a variable but equal number of data packets, so as to make maximum use of the capacity of the frames. Messages and signalling information are transmitted by the mobile terminals (6) on a signalling channel (S) comprising frames F comprising both long (DS) and short (SS) slots, the division between such slots being controlled by the earth station (2). The mobile terminals (6) may operate in either an earth station registered mode, in which they tune to the earth station TDM channel (T) when idle, or a network registered mode, in which they tune to a network station TDM channel (NT) when idle. The earth station (2) may operate in a standard traffic mode, in a low traffic mode, in which the network station TDM channel NT and signalling channel NS replace the earth station TDM channel T and signalling channel S, or in a high traffic mode in which the earth station (2) transmits multiple TDM channels (T). The channel spacing between frequency channels used by mobile terminals (6) referenced to the same earth station TDM channel (T) is narrower than that between channels used by mobile terminals (6) referenced to different TDM channels (T). The earth station (2) transmits using a BPSK modulation scheme, while the mobile terminals transmit using a π/2 BPSK modu-

lation scheme. The earth station (2) stores lists of addresses which are indexed using a short-form addressing scheme, and can be modified by the mobile terminals (6). The mobile terminals (6) can request entry into a sleep mode.

Fig. 1

**Description**

The present invention relates to a communication method and apparatus, and particularly to a method and apparatus for use in a satellite messaging system.

One example of such a system is the Inmarsat-C™ system which was proposed and tested in the 1980's, began pre-operational service in March 1989 and entered full commercial service in January 1991. This system provided a low-cost messaging system which, for regulatory reasons, was initially only available to maritime users. Articles which outlined the proposed Inmarsat-C™ system include 'Ships and Satellites - Satellite Communications Terminal Proposal at a New Low Cost' by R. Gallagher, Canadian Electronics Engineering, February 1987, 'Standard-C and Positioning' by J. C. Bell, Journal of the Institute of Navigation, Vol. 34 No. 2, Summer 1987, and 'The Inmarsat Standard-C Communications System' by K. Phillips, ICC '88, June 12-15 1988.

Even before the pre-operational launch of Inmarsat-C™ it was recognized that that this service could be adapted for land-based use, as discussed for example in 'Land-Based Satellite Services for Mobile Communications' by R. Gallagher, Telecommunications Vol. 22 No. 11, November 1988, and 'World-Scale Mobile Data Communications', Electronics & Wireless World, April 1988. A description of the Inmarsat-C™ system after its full commercial launch was given in 'World's Smallest Global Satcoms System 'On-Air'', by B. Shankar, Electrotechnology Vol. 2 No. 2, April/May 1991.

Chapter 13 of the book 'Satellite Communication - Principles & Applications' by D. Calcutt and L. Tetley, First Edition 1994 describes the Inmarsat-C™ service and mobile terminal specifications. The document GB 2 302 485 A also describes some aspects of the Inmarsat-C™ system and refers to further documents concerning this system.

Other satellite messaging services have been implemented, such as the Inmarsat-D™ service which is designed for low bit-rate messaging to small terminals and is described for example in 'Truly Global Messaging - the mobile satcomms solution' by B. A. Patel, Inmarsat, pending UK patent application no. 9625256.4 and International application no. PCT/GB98/00980.

Other satellite messaging systems have been proposed, for example in EP 0 505 489 A (Motorola).

However, there is considerable scope in existing and previously proposed satellite messaging systems to improve their bandwidth efficiency and management of channel resources, to reduce signalling overhead and to reduce the power consumption of terminals.

Statement of the Invention

According to one aspect of the present invention, there is provided a satellite communications system in which an earth station communicates with a plurality of mobile terminals via a satellite using a common channel, in which bulletin board information and packets addressed to individual terminals are broadcast, and a signalling channel, in which the terminals transmit packets to the earth station. In addition, messaging channels are set up both in the from-mobile and to-mobile direction after a preliminary call set-up exchange using the common and signalling channels, in order to exchange messages between the earth station and the terminals. However, messages are also exchanged in the common and signalling channels.

An advantage of this arrangement is that short messages can be sent without any preliminary signalling, while longer message exchanges can take place on dedicated channels. The dedicated channels may be spot beam channels, thereby increasing the spectral and power efficiency of the system.

According to another aspect of the present invention, there is provided a method of formatting data for transmission as a data burst having a frame structure, comprising formatting the data into fixed length packets and assembling the packets into a number of frames each of the same length, the number of frames and the length of each frame being determined so as to minimize the wasted capacity of the frames while imposing a maximum frame length so as to reduce delay and processing overhead.

According to another aspect of the present invention, there is provided a frame format for a slotted Aloha channel in a satellite communications system, in which each frame is divided between short time slots and long time slots, the division of the frame into such slots being variable. An advantage of the long time slots over the short time slots is that they are more bandwidth efficient, because of the need to leave a guard time between slots. However, it is wasteful to use a long time slot when the data to be transmitted could fit within a short time slot. The variable division of the frame between short and long time slots can therefore be varied according to demand for each type of slot.

According to another aspect of the present invention, there is provided a satellite communications system in which mobile communications terminals can operate either under the control of a network coordination station which controls terminals to receive a broadcast channel of an individual earth station each time a message is to be sent to or received from that earth station, or under the control of an individual earth station without recourse to the network coordination station. Advantageously, this reduces the traffic load on the network coordination station and allows greater control of the quality of service to the terminals, while allowing terminals to revert to the network coordination station if necessary, such as when a terminal is first commissioned or has lost contact with its assigned earth station.

According to another aspect of the present invention, there is provided a satellite communication system in which earth stations may operate in different modes depending on the amount of traffic handled by the station. In a low traffic mode, there are no channels continuously assigned to the earth station, but all call set-up signalling with terminals is carried out indirectly via a network coordination station. In a standard mode, the earth station transmits a continuous channel including general information relating to the earth station, and packets addressed to specific terminals. At least one signalling channel is also continuously available for signalling to the earth station. In a high traffic mode, the earth station transmits more than one continuous channel, and controls terminals so as to receive a selected one of the continuous channels. An advantage of this arrangement is that bandwidth is assigned to each earth station according to its traffic requirements, allowing more efficient bandwidth allocation in the system as a whole.

According to another aspect of the present invention, there is provided a channel allocation scheme for a satellite communications system in which the frequency spacing between channels allocated for transmission to terminals which are referenced to the same received frequency signal is narrower than that between channels allocated for transmission to terminals which do not share the same reference signal. This allows sufficient spacing for uncertainty in transmission frequency without the risk of interference between channels, while reducing spacing and therefore using bandwidth more efficiently where there is less uncertainty.

According to another aspect of the present invention, there is provided a modulation scheme for a satellite communications system, in which signals transmitted to a mobile terminal are modulated using BPSK, while signals transmitted by a mobile terminal are transmitted using $\pi/2$-BPSK, thereby reducing the linearity requirements for a high-power amplifier in the mobile terminal, giving greater efficiency and reduced cost.

According to another aspect of the present invention, there is provided a short addressing scheme for addresses of terminals in a satellite communications system, in which a list code and an index code refers to one of a plurality of lists of addresses and a selected address from the selected list, respectively. Terminals are able to modify the addresses in a list using a communication protocol, providing greater flexibility and ease of use.

According to another aspect of the present invention, there is provided a satellite communications system in which terminals can request entry into a sleep mode, thus providing users with the option of using sleep mode or continuously monitoring a broadcast channel.

The present invention extends to apparatus, methods and signals which embody inventive aspects of the present invention.

Brief Description of Drawings

Specific aspects of the present invention will now be described with reference to the accompanying drawings, in which:

Figure 1 shows the arrangement of spot beams and a global beam of a satellite in a satellite communications system in an embodiment of the present invention;
Figure 2 is a diagram of functional parts of the satellite communications system which connect a mail client to a mobile terminal;
Figure 3 is a diagram showing the physical channels used for communication between different entities in the satellite communications system;
Figure 4 is a diagram of the connections between land earth stations, network coordination stations and a network operations centre in the satellite communications system;
Figure 5 is a layer diagram of the different protocol layers of the satellite communications system;
Figure 6 is a more detailed diagram of the functions of the physical layer of Figure 5;
Figure 7 is a diagram of an example of a $\pi/2$-BPSK modulator used in the satellite communications system;
Figure 8 is a diagram of the frame format of a signalling channel in the satellite communications system;
Figure 9 is a more detailed diagram showing the functions of the access layer of Figure 5; and
Figure 10 is a state diagram of a connection-oriented process.

System Overview

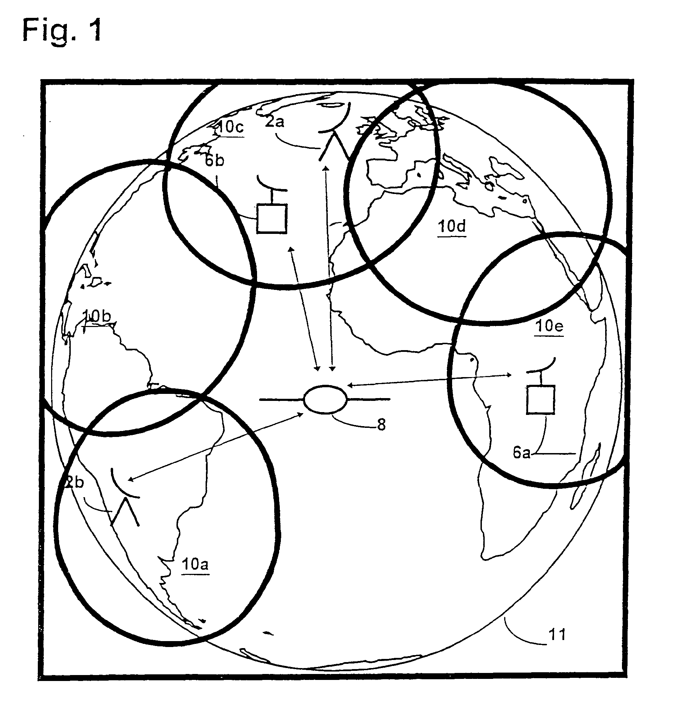

Figure 1 shows the principal parts of a satellite communication system incorporating embodiments of the present invention. A geostationary satellite 8 has a multibeam antenna which projects a plurality of spot beams 10a to 10e onto the earth's surface and a global beam 11 over the whole field of view of the satellite 8. The multibeam antenna produces separate outputs for signals received in each of the spot beams and the global beam, and has separate inputs such that signals input at one of those inputs are transmitted in a corresponding one of the beams. The satellite 8 also has feeder link transmitter and receiver antennas for communication with a plurality of land earth stations (LES) 2a, 2b.

Different frequency channels in the feeder links are mapped by the satellite 8 to different ones of the beams 10a to 10e, 11 and vice versa, allowing the LESs 2a, 2b to communicate with mobile earth stations 6a, 6b in any one of the spot beams 10 to 10e or the global beam 11.

One of the LESs 2a also acts as a Network Coordination Station (NCS) with which the MESs 6 using the satellite 8 may communicate in order to receive channel allocations via that satellite. The satellite communication system may comprise several such satellites 8, each having one NCS and several LESs 2 in communication with it.

For example, the satellite 8 may be an Inmarsat-3™ satellite of the type described in the article 'Launch of a New Generation' by J R Asker, TRANSAT, Issue 36, January 1996, pages 15 to 18, published by Inmarsat, the contents of which are included herein by reference. In one example the satellite 8 is the AOR-E (Atlantic Ocean Region - East) Inmarsat-3™ satellite and the LESs 2a, 2b are the Inmarsat LESs located at Goonhilly, UK and Tangua, Brazil, with modifications as will be described hereafter.

Communications Functions

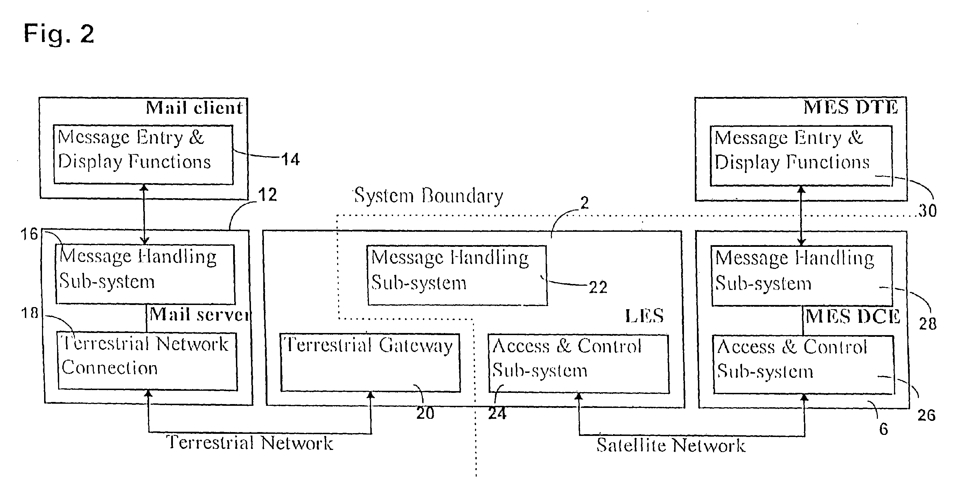

Figure 2 shows the interconnection between communications functions at the LES 2, the MES 6, a message server 12 and a message client 14. The message client 14, for example a computer running a mail application, is connected to the message server 12 via a wireline connection, such as a PSTN. The message server 12 comprises a message handling subsystem 16 which receives messages from a plurality of message clients such as the message client 14 and determines to which LES 2 each message should be sent, and a terrestrial network interface 18 for sending and receiving messages to and from the LES 2 through a terrestrial network such as an ISDN. Messages are received and transmitted at a terrestrial gateway 20 of the LES 2 and exchanged with a message handling subsystem 22 which stores the messages. An Access and Control Sub-system (ACS) 24 at the LES 2 communicates with an MES ACS 26 at the MES 6 to exchange access and control signals. A message handling subsystem 28 at the MES 6 exchanges messages with the message handling subsystem 22 of the LES 2 via the satellite 8. Messages are entered and displayed by MES data terminal equipment (DTE) 30, which may be a portable computer.

Channels

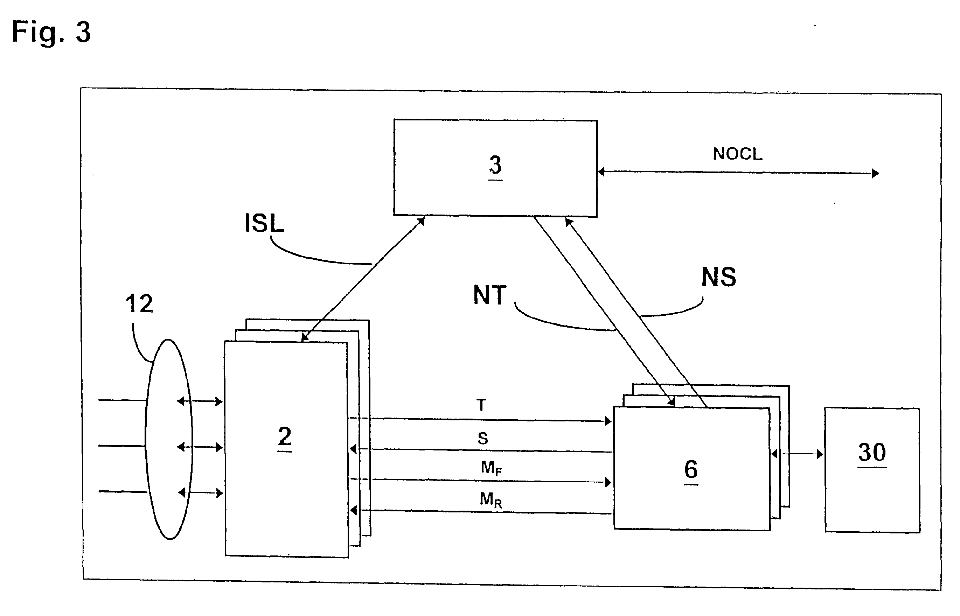

Figure 3 shows the channels which are used over the satellite network for communication via one satellite 8. In the forward direction, from each LES 2 to a plurality of MESs 6, are transmitted an LES Time Division Multiplexed (TDM) channel T, which carries multiplexed messaging data and signalling information, and one or more to-mobile messaging channels $M_F$, which carry additional messages for the MESs 6. Each LES 2 normally transmits its TDM channel or channels in the global beam 11.

In the return direction, a plurality of MESs 6 transmit to each LES 2 in one or more signalling channels S, which carry signalling information and data, and in a from-mobile messaging channel $M_R$, which carries messaging data from the MESs 6.

The MESs 6 transmit signalling information to the NCS 3 on one or more NCS signalling channels NS and receive signalling information from the NCS 3 in one or more NCS TDM common channels NT. The NCS TDM channel NT is always transmitted in the global beam 11.

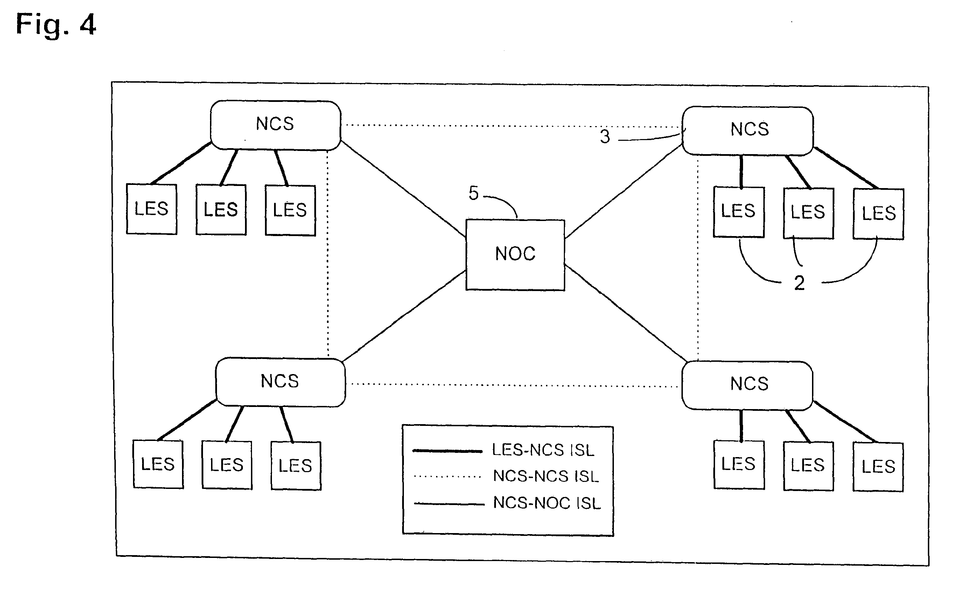

Also shown in Figure 3 and Figure 4 are Interstation Signalling Links ISL, which connect each LES 2 to its associated NCS 3, and Network Operations Control Links NOCL, which connect each NCS 3 to a Network Operations Centre (NOC) 5. The NOC 5 coordinates channel assignments between the NCSs 3 connected to each satellite 8.

Communications Model

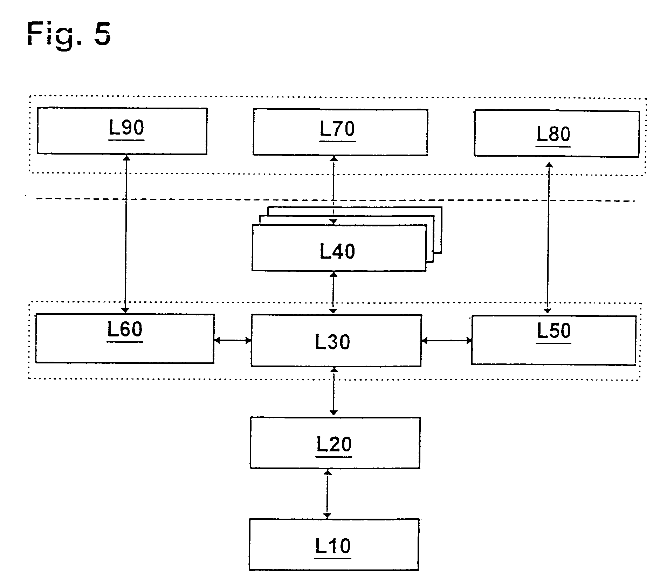

Figure 5 illustrates the different processes which take place in the satellite communications system according to embodiments of the present invention, in terms of 'layers'. The division of layers is not the same as that of the ISO 7-layer communications model, but is modified to illustrate the present system more clearly.

A physical layer L10 includes the functions of tuning to a requested channel, modulation and demodulation, and reporting on channel conditions. An access layer L20 controls access to the transmission medium and the way in which the different channels are used. In the transmit direction, these functions include buffering, generation of CRC field, scrambling, encoding, addition of unique words and interleaving, with reverse functions being carried out in the return direction. The access layer L20 also includes the identification of packet types, the exchange of bulletin board and signalling channel descriptor information with the management entities described hereafter, and the selection of spot beams according to the positions of the MESs 6.

A datalink layer L30 provides logical channels for received and transmitted data to one or more transport layers L40, and includes ARQ handling so that these logical channels are presented as error-free to the transport layers L40. A Resource Management function L50 manages the allocation of channels at the LES 2 and provides channel allocations to the datalink layer L30, under the control of a network resource control application L80. The Mobility Management function L60 stores and provides access to MES registration and status information, under the control of a network architecture control application L90.

The transport layers L40 act as interfaces to applications at an application layer L70, which may be applications running on the MES DTE 30, or applications running at the terrestrial gateway 20 of the LES 2.

Physical Layer Processes

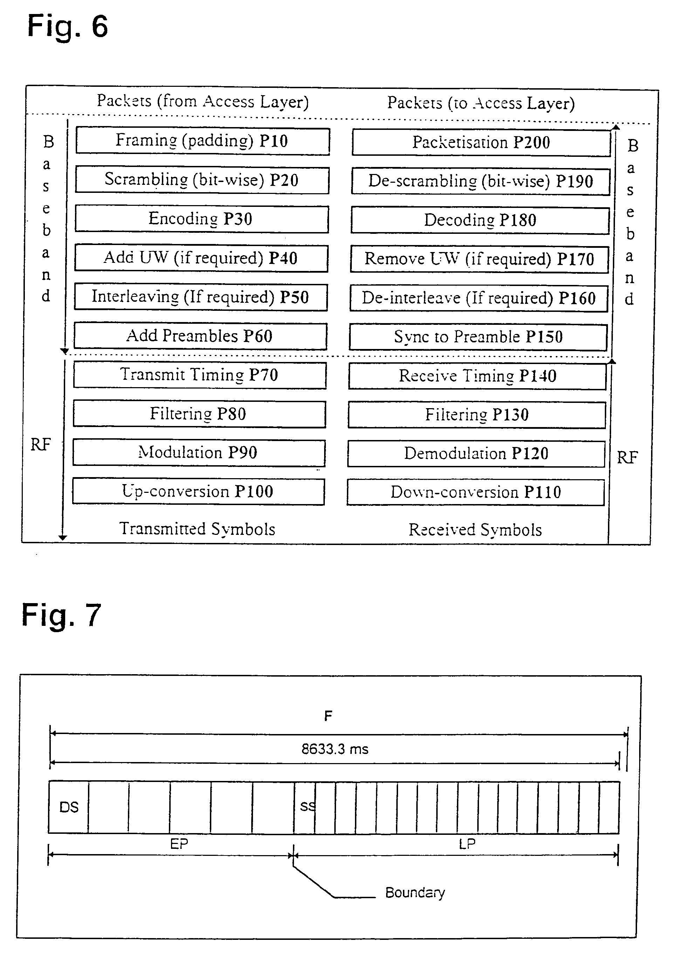

The physical layer processes which are applied to data transmitted and received in all types of channel are shown in Figure 6. In the transmission process, data packets are assembled in a frame of predetermined length (P10), with padding bits being added if the packets do not fill the entire data field of the frame. The assembled data content of the frame is then scrambled (P20) by an exclusive-OR operation with a predetermined pseudo-random bit sequence, and then encoded (P30) by an encoder, such as a half-rate convolutional encoder. If required by the specific format of the relevant channel, a unique word (UW) is added to the encoded sequence. (P40). The resultant arrangement of bits is then interleaved (P50) if required by the specified format. A preamble, which is required in the signalling and message channels but not in TDM channels, is then added (P60), completing the baseband processing of the data.

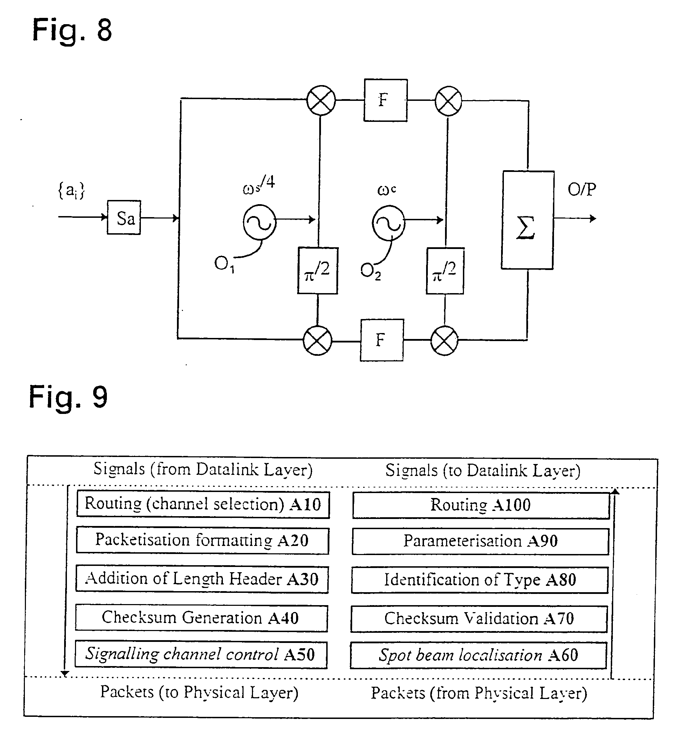

In the RF transmission process, the contents of the frame are output (P70) with a timing synchronised to the timing reference of the channel. The bit sequence is modulated (P90) using binary phase shift keying (BPSK). For the to-mobile channels, BPSK modulation is used, while for the from-mobile channels, $\pi/2$-BPSK modulation is used. This modulation scheme has an advantage over normal BPSK in that the amplitude variation is significantly reduced; hence, the high-power amplifier (HPA) used in the transmission stage of the MES 6 has reduced linearity requirements. In the $\pi/2$-BPSK modulation stream, the baseband signal is mixed with the output of a local oscillator at 1/4 of the symbol rate. A example of a $\pi/2$-BPSK modulator which may be used in the MES 6 is shown in Figure 8. In this Figure, the input data sequence $\{a_i\}$ is sampled by a sampler Sa. The sampled signal is mixed in parallel with the output of a first oscillator O1 at 1/4 of the symbol rate of 1200 symbol/s, with the oscillator output mixed with one of the parallel signals being phase shifted by $\pi/2$ relative to the output mixed with the other parallel signal. The parallel mixed outputs are both filtered by a filter F.

The modulation step (P90) includes a filtering step (P80) to reduce interference with other channels. The modulated signal is then up-converted (P100) and transmitted at a rate of 1200 symbol/s.

In the RF reception process, essentially the reverse steps to the transmission process are performed, i.e. down-conversion (P110), demodulation (P120) and filtering (P130), and acquiring the timing (P140) of the demodulated bits to generate bits at baseband.

In the baseband decoding process, in those burst mode channels which have a preamble, the presence of a preamble is detected (P150) and the frame timing is derived therefrom. If the bit sequence has been interleaved at the transmission stage, it is de-interleaved (P160). If a unique word is present, it is detected and removed from the received data (P 170). The remaining data is then decoded (P 180), descrambled (P 190) and divided into data packets (200).

TDM Channels

Each LES 2 and NCS 3 transmits one or more corresponding LES TDM channel T or NCS TDM channel NT as a continuous series of frames in a single frequency channel. The contents of each frame are shown below in Table 1:

### Table 1

| Bulletin Board |
|---|
| Signalling Channel Descriptors |
| Continuation B Packet |
| Control Packets |
| Safety Priority EGC Packets |
| TDM Message Data Packets |
| Connectionless Data Packets |
| Normal Priority EGC Packets |
| Continuation A Packet or 'Fill' |
| Flush byte |

The bulletin board contains information about the status of the LES 2 or NCS 3 transmitting the TDM channel, and the total number of signalling channel descriptors which follow. The signalling channel descriptors indicate the frequency channels to be used for the LES signalling channel S or NCS signalling channel NS respectively, and control the division of the signalling channel between single and dual slots, as described hereafter.

The TDM message packets are used to transmit data to the MESS 6 under a connection oriented protocol in which a call is set up from the LES 2 to the MES 6, data is transferred using either the TDM channel T or one of the messaging channels $M_F$, and the call is then cleared. The connectionless data packets do not require a call to be set up before message transfer.

If an additional message packet is to be sent but cannot be fitted into the current frame, the first part is transmitted in the 'Continuation A' packet and the second part is transmitted in the 'Continuation B' packet of the next frame. The control packets are used to send protocol signals to the MESs 6, while the TDM message and 'connectionless' data packets are used to send message data to the MESs 6.

The EGC packets are used to send 'Enhanced Group Call' messages to groups of MESs 6, such as the 'SafetyNet™' safety priority and the 'FleetNet™' normal priority messages already implemented in the Inmarsat-C™ system.

Each TDM frame is scrambled, ½ rate encoded and interleaved before transmission. However, no preamble is used in the TDM channel, as the frames are transmitted continuously.

### Message Channels

In the known Inmarsat-C™ system, messages are transmitted from the LES 2 to each MES 6 via a TDM channel similar to the LES TDM channel T described above, in a global beam 11. In an embodiment of the present invention as described below, additional forward messaging capacity is provided by forward messaging channels $M_F$ which are carried by the spot beams 10a to 10e.

In the format of the forward and reverse messaging channels $M_F$, $M_R$, messages are transmitted in a time-divided burst format comprising a unique word followed by from 1 to 5 frames, all of the same length. The length of the frames is determined as between 1 and 16 packets, according to the total number of packets, so as to match the total data capacity of the frames as closely as possible with the total number of packets to be transmitted, according to the following algorithm, described in pseudo-code:

```
CalculateFrameLength (int NumberOfPackets, NumberOfFrames, PacketsPerFrame)
{
        int FillPackets, OptNumberOfFrames, OptPacketsPerFrame;
/* Calculate the frame size using the basic algorithm: */
        NumberOfFrames := NumberOfPackets / 16;
        If ((NumberOfFrames * 16) < NumberOfPackets)
                NumberOfFrames++;
        PacketsPerFrame := NumberOfPackets / NumberOfFrames;
        If ((NumberOfFrames * PacketsPerFrame) < NumberOfPackets)
                PacketsPerFrame++;
        FillPackets := (NumberOfFrames * PacketsPerFrame) - NumberOfPackets;
/* Now increase the optimality of the algorithm by checking a slightly larger number of
frames: */
        OptNumberOfFrames := NumberOfFrames+1;
        OptPacketsPerFrame := NumberOfPackets / OptNumberOfFrames;
        If ((OptNumberOfFrames * OptPacketsPerFrame) < NumberOfPackets)
                        OptPacketsPerFrame++;
/* If the number of fill packets will be reduced then use the revised frame size: */
        If (((OptNumberOfFrames * OptPacketsPerFrame) - NumberOfPackets) <
FillPackets)
        {
                NumberOfFrames := OptNumberOfFrames;
                NumberOfPackets := OptNumberOfPackets;
                 FillPackets := (NumberOfFrames * PacketsPerFrame) -
NumberOfPackets;
        }
}
```

The results of this algorithm are shown below in Table 2

Table 2

| Number of Packets | Number of Frames | Packets Per Frame |
|---|---|---|
| 1-16 | 1 | 1-16 |

Table 2   (continued)

| Number of Packets | Number of Frames | Packets Per Frame |
|---|---|---|
| 17, 18 | 2 | 9 |
| 19,20 | 2 | 10 |
| 21 | 3 | 7 |
| 22 | 2 | 11 |
| 23, 24 | 2 | 12 |
| 25,26 | 2 | 13 |
| 27 | 3 | 9 |
| 28 | 2 | 14 |
| 29,30 | 2 | 15 |
| 31,32 | 2 | 16 |
| 33 | 3 | 11 |
| 34-36 | 3 | 12 |
| 37-39 | 3 | 13 |
| 40 | 4 | 10 |
| 41,42 | 3 | 14 |
| 43, 44 | 4 | 11 |
| 45 | 3 | 15 |
| 46-48 | 3 | 16 |
| 49, 50 | 5 | 10 |
| 51,52 | 4 | 13 |
| 53-55 | 5 | 11 |
| 56 | 4 | 14 |
| 57-60 | 4 | 15 |
| 61-64 | 4 | 16 |

Each frame is scrambled using the same scrambling vector, and is encoded and interleaved independently of the other frames. The timing of transmission of the frames in the from-mobile messaging channel $M_R$ is referenced to the timing of the LES TDM channel T as received by the transmitting MES 6.

Each message channel packet has a fixed length of 35 bytes, and comprises a packet number header of one byte length, including a packet number, up to 32 bytes of message data, the number of bytes not occupied by message data being filled with fill bytes, and a two-byte cyclic redundancy check (CRC), as shown below in Table 3:

Table 3

| Packet Number | Message Data and Fill | CRC |
|---|---|---|

Signalling Channels

Signalling channels S and NS are selected by each MES 6 from those indicated in the corresponding TDM channel T or NT according to whether the MES 6 has any information about the spot beam 10 in which it is located. If the MES 6 has no information, it selects one signalling channel S or NS in each of the spot beams 10 and transmits in all of these selected channels in turn. The receiving LES 2 or NCS 3 determines in which of the spot beams the MES 6 is located according to the received signal strength or other factors, and signals this to the MES 6. Subsequently, the MES 6 will use a signalling channel S or NS in the selected spot beam until it no longer receives acknowledgement from the LES 2 or NCS 3, when the MES 6 reverts to transmitting in all the spot beams 10. This method is described in more detail in WO 97/05710, the contents of which are incorporated herein by reference.

The signalling channel format comprises a sequence of constant length frames, each divided into slots which are accessed by different MESs 6 on a slotted ALOHA (random access) basis. The frame format is shown in Figure 7. Each frame F has a frame duration of 8.64 seconds, with the last 8 symbol periods being unused, giving a usable frame length of 8633.3 ms. The usable frame period is divided between dual slots DS of 740 symbol periods, which occupy the earlier part EP of the frame, and single slots SS of 370 periods which occupy the later part LP. The earlier part EP may comprise 10, 8, 6 or 4 dual slots, while the later part LP comprises respectively 8, 12, 16 or 20 single slots.

The format of a burst in each slot comprises a unique word of 64 symbols and a block of convolutionally encoded data, of either 252 or 640 symbols in a single or dual slot respectively. For the single slot, the number of data bytes varies depending on the signalling information being sent, but the signalling data is always followed by a CRC and sufficient 'pad' bytes to bring the total length to 15 bytes. For a dual slot, the data is always 32 bytes in length, followed by a CRC. The data for each slot is scrambled and half-rate encoded. For the dual slot, the data is interleaved, but this does not occur with the single slot.

Channel Spacing

The tuning step size of the upconversion stage 100 is 1.25 kHz, giving possible frequency spacing of 1.25, 2.5, 3.75 or 5 kHz. Groups of channels which are successive in frequency and which are indicated by the same TDM channel T or NT have a channel spacing of 2.5 kHz. MESs 6 which are tuned to the same TDM channel use the frequency of this TDM channel as a reference to control the frequencies of their transmissions in the signalling channels S and from-mobile message channels $M_R$. The spacing between frequency channels which are not referenced to a common frequency channel are set at either 3.75 or 5 kHz.

Optionally, where RF receiving stages use interference cancelling techniques, a channel spacing of 1.25 kHz may be used.

In channel assignments to the MESs 6, for example in the signalling channel descriptors or the message assignment packets, the channel is indicated by a channel number in a 16 bit channel number indication field. The channel frequency is calculated as follows:

$$\text{Channel Frequency} = (\text{Base} + \text{Offset}*1.25 \text{ kHz} + M*2.5 \text{ kHz})$$

where Base is different for channel transmitted and received by the MESs,
Offset is one bit of the channel number indication field, and
M is the value of the other 15 bits of the channel number indication field.

In the MESs 6, the RF transmission and reception stages are tuned to transmit and receive frequency channels indicated as above by the channel number.

LES Registration

In the existing Inmarsat-C™ system, MESs remain tuned to the NCS TDM channel NT when idle. The NCS TDM includes information concerning all of the LESs 2 which use the same satellite. However, in an embodiment of the present invention, at least some of the MESs 6 may operate in either a network registered mode, as in the existing Inmarsat-C™ system, or an LES registered mode, as described below.

Each NCS 3 and LES 2 maintains a database of the status of MESs 6. The database contains information on each MES 6 which is registered with the NCS 3 or one of the LESs 2 within a single region served by one satellite 8. The information comprises the identity of the LES 2 with which the MES 6 is registered, or an indication that the MES 6 is registered with the NCS 3. Changes in MES status are signalled from the LES 2 or NCS 3 with which the MES 6 registers to the other LESs 2 within the same region.

In order to register with an LES 2, the user of an MES 6 first enters an agreement with the operator of that LES, whereby the LES 2 is made available to the user and data identifying the corresponding MES 6 is stored at the LES 2 to allow the LES 2 subsequently to identify the MES 6. The user then sets the MES to enter an LES registered mode, as described below.

LES Registered Mode

In LES registered mode, an MES 6 no longer uses the NCS TDM channel NT and signalling channel NS. The MES 6 acquires from the NCS TDM channel NT frequency information concerning the LES TDM channel T of the LES 2 with which it is to register. When the operator of this MES 6 initiates a login procedure, the MES 6 transmits a login request to the assigned LES 2. In response, the LES 2 transmits an acknowledgement signal on the LES TDM channel T, if the MES 6 is accepted by the LES 2. Subsequently, that MES 6 tunes into the LES TDM channel T when idle.

Standard Traffic Configuration

In a standard traffic configuration, the LES 2 transmits a single TDM channel T; however, this configuration may be modified if the amount of traffic through an individual LES 2 is particularly high or low, as described below. The configuration of each LES 2 is indicated in the NCS TDM channel NT.

Low Traffic Configuration

At least some of the LESs 2 may be configured in a low-traffic configuration, in which they do not transmit a permanent TDM channel T. Instead, a low traffic LES 2 transmits information which would normally be transmitted on its LES TDM channel T via an ISL to the NCS 3, where this information is transmitted on the NCS TDM channel NT. Likewise, a low traffic LES 2 does not receive signalling channels S. Instead, an MES 6 registered with a low-traffic LES 2 transmits on the NCS signalling channel NS, and the NCS 3 passes the relevant signalling packets via an ISL to the low-traffic LES 2. Only to-mobile and from mobile messaging channels $M_F$ and $M_R$ are directly transmitted respectively from and to a low-traffic LES 2.

An MES 6 wishing to register with a low-traffic LES 2 transmits a login request indicating that LES 2 to the NCS 3. The NCS 3 forwards the login request to the LES 2. If the LES 2 accepts the registration, it transmits an acknowledgement to the NCS 3, which forwards the acknowledgement to the MES 6 via the NSC TDM channel.

Each TDM channel is a continuous channel transmitted in the global beam 11 and is therefore a scarce resource; this is reflected in the charges made for example by Inmarsat to LES operators for use of a TDM channel T. On the other hand, demand-assigned channels such as the messaging channels $M_F$ and $M_R$ are only assigned as they are needed and their use is charged accordingly. Therefore, the Low Traffic configuration is particularly advantageous for newly set-up LESs 2, which may initially not have many registered MESs 6, and therefore do not handle much traffic. From an economic point of view, the removal of the need to lease a permanent global beam channel reduces the start-up costs for these LESs 2. From a technical point of view, such LESs do not occupy a permanent global beam channel when the traffic capacity of that channel is not yet needed, and therefore the bandwidth efficiency of the system as a whole is improved.

High Traffic Configuration

At least some of the LESs 2 may be configured in a high-traffic configuration, which is similar to the standard configuration except that the LES 2 transmits multiple TDM channels T, one of which is designated as the primary TDM channel and is indicated in the NCS TDM channel NT. The primary TDM channel T includes signalling channel descriptors which indicate spot-beam frequency channels to be used as signalling channels S.

To register with a high-traffic LES 2, the MES 6 transmits a login request on one of the signalling channels S. The LES 2 may either accept the MES 6 to use the primary TDM channel subsequently, in which case it transmits a simple acknowledgement signal to the MES 6, or the LES 2 transmits an acknowledgement signal including an indication of a secondary TDM channel T. In the latter case, the MES 6 retunes to that secondary TDM channel and sends a secondary login request in a signalling channel S indicated by that secondary TDM channel T. If the secondary login request is received successfully, the LES 2 transmits an acknowledgement signal to the MES 6, which then remains tuned to the secondary TDM until it receives an indication to retune from the LES 2, or is controlled to retune by the operator of the MES 6.

The High Traffic configuration removes the limit on traffic capacity of a single TDM channel.

Each LES 2 may operate semi-permanently in one traffic mode, or may switch between traffic modes in response to changing numbers of registered MESs 6.

High Traffic NCS

In a standard operating mode, the NCS 3 transmits only one TDM channel NT, while in a high-traffic mode, the NCS 3 transmits more than one such channel: a primary channel and one or more secondary channels. The primary channel is fixed in frequency and is the first channel to be received by an MES 6 when attempting to receive information from the NCS 3. The MES 6 may subsequently be commanded to retune to a secondary TDM channel NT, in the same manner as with secondary LES TDM channels T.

Access Layer Processes

The functions performed by the access layer L20 are shown in greater detail in Figure 9. Steps shown in italics are not performed by both the LES 2 and MES 6. In the direction from the datalink layer L30 to the physical layer L10, the functions are as follows: at a routing step A10, a physical channel is selected corresponding to the logical channel from the datalink layer L30. Data from the datalink layer L30 is divided into packets (A20), length information is added, where necessary (A30) and a checksum is calculated for each packet (A40). Each packet has a general format as shown below:

| Packet Descriptor | Type Dependent Fields | Checksum |
|---|---|---|

The packet descriptor identifies the packet type, and indicates the packet length where this is variable.

In the MES 6, a signalling channel control step (A50) is performed, in which the signalling channels and slots to be used for signalling packets are selected. In any case, the generated packets are output to the physical layer L10.

In the direction from the physical layer L10 to the datalink layer L30, the following processes are performed. At the LES 2 and the NCS 3, a spot beam localization process (A60) is performed, as described for example in WO 97/05710. In any case, the checksum of received packets is checked against their data contents (A70) to determine whether the contents (or checksum) have been corrupted. The type of each packet is identified (A80) from the packet descriptor. In a parameterisation process (A90), parameters are extracted from each packet for transfer to the required datalink process in an appropriate format. Finally, in a routing step (A100), the data content of the packets is routed to the appropriate data link layer process.

Use of Channels

The types of data transfer which occur over the different types of channel are summarized below in Table 4:

Table 4

| | Global Beam | | Spot Beam | |
|---|---|---|---|---|
| | **To MES** | **From MES** | **To MES** | **From MES** |
| **LES Signalling** | LES TDM (T) | Signalling (S) | LES TDM (T) | Signalling (S) (Single Slot) |
| **NCS Signalling** | NCS TDM (NT) | Signalling (NS) | NCS TDM (NT) | Signalling (NS) (Single Slot) |
| **LES Data Transfer (Connectionless)** | LES TDM (T) | Signalling (S) | LES TDM (T) | Signalling (S) (Single or Dual Slot) |
| **NCS Data Transfer (Connectionless)** | NCS TDM (NT) | Signalling (NS) | NCS TDM (NT) | Signalling (NS) (Single or Dual slot) |
| **LES Data Transfer (Connection-oriented)** | LES TDM (T) or To-mobile message $M_F$ | From-mobile message $M_R$ | LES TDM (T) or To-mobile message $M_F$ | Signalling (S) (Dual Slot) or From-Mobile message $M_R$ |

The selection of connectionless or connection-oriented data transfer mode is performed in the datalink layer L30, according to the quantity of message data to be sent.

Connectionless Data Transfer

The connectionless data protocol allows immediate transfer of small quantities of data between the LES 2 and the MES 6. No preliminary signalling is required; instead, each connectionless data packet includes the addresses of the MES 6 and the LES 2 between which the packet is sent. The connectionless data packets have the following format:

[Type=00][DN Index] [Data Sequence Number][MES ID] [LES ID] [Data].

The DN Index is a data network index which indicates one of a set of closed user groups to which the MES 6 belongs. The MES ID is an identity code which indicates the identity of the MES 6 within the indicated user group, while the LES ID is an identity code indicating the transmitting or receiving LES 2. The data sequence number indicates the order of the packet within a longer message, allowing a single message to use more than one packet, and indicates whether the packet is at the start, middle or end of a message.

In a connectionless data transfer from the LES 2 to the MES 6, the LES 2 transmits the connectionless data packets in the TDM channel T to which the MES 6 is tuned. The MES 6 acknowledges the packets by sending an acknowledgement packet in the signalling channel S. In a connectionless data transfer from the MES 6 to the LES 2, the MES 6 transmits the data packets in a dual slot of the signalling channel S. The LES 2 acknowledges the data packets by means of an acknowledgement packet in the TDM channel T. In an alternative data reporting protocol, for use for example by remote monitoring equipment, the LES 2 does not acknowledge the data packets, so as to reduce the demand for capacity on the TDM channel T.

Connection-Oriented Data Transfer

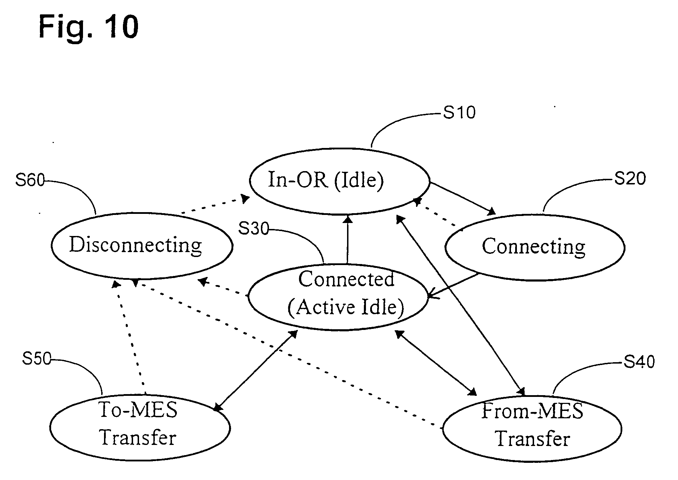

The connection-oriented data transfer protocol involves three phases: call set-up, transfer and clear. This protocol is used for transfer of larger quantities of data, and allows multiple messages to be transferred, either in one direction or in both directions, using the same logical connection. A state transition diagram for the connection-oriented process is shown in Figure 10.

The MES 6 begins in an Idle state S 10, in which it is registered in an ocean region but is not engaged in any communication. As described below, the MES 6 and LES 2 enter a Connecting state S20 during which a connecting protocol exchange takes place. When the protocol exchange is complete, the MES 6 enters a Connected state S30 in which it is ready to receive and/or transmit messages. If the connecting protocol exchange fails, the MES 6 returns to the Idle state S 10. From the Connected state S30, the MES 6 and LES 2 can enter either a From-MES Transfer state S40 or a To-MES Transfer state S50, as described below. Once the last transfer is complete, a disconnecting protocol exchange takes place between the MES 6 and the LES 2 in a Disconnecting state S60. Once the disconnecting protocol is complete, the MES 6 returns to the Idle state S10. These processes will now be described in detail.

In a call originated by the LES 2, the LES 2 sends a connection announcement packet to the MES 6. If the MES 6 is registered with the LES 2, the connection announcement packet is transmitted on the LES TDM channel T. If the MES 6 is in a network registered mode and not registered with any LES 2, the LES 2 sends the connection announcement packet over the inter-station link ISL to the NCS 3, which transmits the packet to the MES 6 on the NCS TDM channel NT. In response to this packet, the MES 6 tunes to the LES TDM channel T. If the MES 6 is registered with another LES 2, the LES 2 transmits the connection announcement packet through the ISL, via the NCS 3, to the registered LES 2, which transmits the packet on its own LES TDM channel T. In response to this packet, the MES 6 retunes to the TDM channel T of the LES 2 which originated the call. In each case, the MES 6 then transmits a connection response on the signalling channels S indicated by the TDM channel T of the LES 2 originating the call.

If the MES 6 is in the network registered mode, the LES 2 then transmits an MES status packet to the NCS 3 indicating that the MES 6 is busy. If the MES 6 is registered with another LES 2, the originating LES 2 sends the MES status packet to the other LES 2, via the NCS 3.

In a call originated by the MES 6, the MES 6 transmits a connection request packet in the signalling channels S associated with the LES 2 with which the call is to be made. If the MES 6 is not registered with that LES 2, it first tunes to the TDM channel T of that LES 2 to determine which signalling channels to use. If the LES 2 accepts the connection, it transmits a connection acknowledgement on its TDM channel T.

Once the call has been set up, multiple messages can be transferred in either direction using designated to-mobile and from-mobile message channels $M_F$ and $M_R$. In a to-mobile message transfer, the LES 2 sends a message assignment packet to the MES 6, indicating the number of packets to be transferred, the to-mobile message channel $M_F$ to be used, and the start time of the transfer. The MES 6 tunes to the indicated to-mobile message channel $M_F$ at the specified time, receives the data packets, retunes to the LES TDM channel T, and transmits an acknowledgement on the signalling channels, indicating which packets were received. Any packets not received are then retransmitted by the LES 2, either on another indicated message channel $M_F$ or on the TDM channel T. Optionally, if spare capacity is available, the original transfer may also take place on the TDM channel T.

Each transfer may comprise all or part of an individual message. If the LES 2 is operating in low traffic mode, the message assignment packet or data packets which would otherwise be transmitted on the LES TDM channel are sent to the NCS 3 and transmitted on the NCS TDM channel NT instead.

After the last transfer to the MES 6 has been made and all the packets therein acknowledged, the LES 2 transmits a connection clear packet addressed to the MES 6 on the TDM channel. No response to the connection clear packet is required. If the MES 6 is not registered with the LES 2 with which the call is set up, the LES 2 sends an idle status message to the NCS 3 or to the LES 2 with which the MES 6 is registered.

In a from-mobile transfer, the MES 6 transmits a message transfer request on the signalling channel S, specifying a logical channel number, a transfer sequence number and the total number of packets to be transferred. In response to this request, the LES 2 reserves capacity for the transfer in a from-mobile message channel $M_R$ and transmits a message transfer assignment packet on the TDM channel T indicating the from-mobile message channel $M_R$ to be used, the timing reference for the start of the transfer, and the number of packets which may be transferred in a first block. The MES 6 tunes to the indicated message channel $M_R$, transmits the first block of packets with the specified timing, and retunes to the TDM channel T. If the first block did not include all of the packets to be sent, the LES 2 transmits another message transfer assignment packet for the next block of packets. If not all of the packets of the previously transmitted block were received correctly, the LES 2 also transmits an acknowledgement signal indicating which packet numbers were not received, and the MES 6 retransmits those packets in the next assigned block. The process repeats until all of the packets originally indicated by the MES 6 have been received by the LES 2; the LES 6 then transmits an acknowledgement on the TDM channel T.

If the message to be sent by the MES 6 is less than 32 bytes long, the MES 6 does not send a message transfer request, but simply transmits the message in a dual slot of the signalling channel S. If the message is received, the LES 2 acknowledges it with a acknowledge signal in the TDM channel T.

If the MES 6 is transmitting its last message in a connection-oriented transfer, it indicates this in the message transfer request packet. The LES 2 then sends a connection clear signal in the TDM channel T and, if the LES 2 is not the registered LES of the MES 6, sends an MES status packet to the NCS 3 indicating that the MES 6 is now idle.

Short Form Addressing Scheme

A group of MESs 6 which are registered with the same LES 2 may form a user group administered by that LES 2 without the need to refer to the NCS 3. Each user group is identified by the DNID code mentioned above, and individual members of that user group are identified by a member number accompanying the DNID code.

The LES 2 stores an indexed table of MES addresses for each DNID code. The MES addresses may be downloaded to the LES 2 by connection to a fleet management operator through the terrestrial network interface 18. Alternatively, the MES addresses may be downloaded to the LES 2 and modified by the MES 6, by means of a connectionless or connection-oriented data transfer, as defined above, dependent on the quantity of data to be sent. The LES 2 uses the table to translate a DNID code and member number to an MES address, as shown below in Table 5:

Table 5

| Direction | Source | LES Input | LES Output | Destination |
|---|---|---|---|---|
| To Mobile | Originator (e.g. terrestrial) | DNID, Member | MES Address | MES |
| | | Number | MES | |
| | | | Forward/Return ID | |
| From Mobile | MES | LES ID | MES Address | DNID Owner |
| | | MES | DNID | Address |
| | | Forward/Return ID | Member Number | |
| | | DN Index | | |

The LES 2 also associates a DN Index code with each DNID group. The MES 6 does not store tables of addresses of other MESs within the same group. Instead, the MES 6 is programmed with a set of DN Index codes corresponding to different destinations, such as a fleet base station or a hazardous goods authority. As shown in Table 5 above, the LES 2 translates the DN index to an MES address using the stored tables of addresses.

Within a user group registered at an LES 2, messages may be sent from one MES 6 to another within the same group. The LES 2 uses the DN index of the transmitting MES 6 to identify an address or list of addresses, which may include addresses of other MESs 6.

MES Sleep Mode

Each MES 6 may request sleep mode operation from an LES 2 by sending a sleep mode request packet on a signalling channel S. The LES 2 responds with a sleep mode acknowledgement packet on the LES TDM T, indicating a start frame and an interval, to control the duty cycle for sleep mode operation. The MES 6 then tunes to the LES TDM T from the start frame for a predetermined number of frames, for example 20 frames. This number may be specified in the sleep mode acknowledgement packet. If no messages are sent to the MES 6 during that period, the MES 6 enters a sleep mode in which the RF stage is powered down, for a number of frames determined by the specified interval. The LES 2 does not schedule any messages for transmission to the MES 6 during that interval, but stores the messages until the specified period when the MES 6 is active.

Sleep mode operation may be cancelled by the user of the MES 6, or by the LES 2 with which the MES is registered. If the MES 6 is controlled by the operator to send a message, it leaves sleep mode until the message is transmitted, but returns to sleep mode thereafter if still during the specified sleep mode period.

Applicability

The above embodiments have been described with reference to the Inmarsat-C™ mobile satellite communication service, but may be applied to other satellite communications services, such as the AMSC satellite service as described in US 5713075, US 5717830, US 5708716, WO97/07601, WO97/20362, WO97/20401, W097/21175 and WO97/21281, for example. Aspects of the present invention are also applicable to non-geosynchronous satellite systems.

The specific embodiments have been described in terms of functional blocks or layers; different methods of implementing such functions will be known to the skilled person, within the scope of the present invention.

Aspects of the present invention may be embodied in separate apparatus located in different jurisdictions. The present invention extends to any apparatus or method which contributes to any of the novel technical effects of the invention.

**Claims**

1. A method of transmitting messages of variable length from a first earth station via satellite to a second earth station, the method comprising, for each said message:

   formatting the data content of said message to generate one or more data packets of constant length, each data packet comprising packet information and data,
   determining an integral number of data packets per frame and an integral number of frames according to the number of said data packets and a maximum value of said number of data packets per frame, such that the product of said number of packets per frame and said number of frames is equal to the total number of data packets or greater than the total number of data packets by a minimum number,
   formatting said data packets into said number of frames, each of said frames having no more than said number of packets per frame;
   encoding each said frame independently of the other said frames; and
   transmitting said encoded frames from the first earth station to the second earth station.

2. A method as claimed in claim 1, wherein the data capacity of each of said data packets is 32 bytes.

3. A method as claimed in claim 1 or claim 2, wherein the maximum value of said number of packets per frame is 16 packets.

4. A method of exchanging messages between a satellite earth station and a mobile terminal, comprising:

   performing the method of any one of claims 1 to 3, wherein said first earth station comprises said satellite earth station and said second earth station comprises said mobile terminal; and
   performing the method of any one of claims 1 to 3, wherein said first earth station comprises said mobile terminal and said second earth station comprises said satellite earth station.

5. A mobile satellite communications terminal, comprising:

   an input device for inputting a message;
   a formatter for formatting said message to generate one or more data packets of constant length, each data packet comprising packet information and data, for determining an integral number of packets per frame and an integral number of frames according to the number of data packets and a maximum value of said frame length, such that the product of said number of packets per frame and said number of frames is equal to the total number of data packets or greater than the total number of data packets by a minimum number, and for formatting the data packets into said number of frames, each having no more than said number of packets per frame,
   an encoder for encoding each of said frames independently of the other said frames, and

a transmitter for transmitting said encoded frames to a satellite.

6. A terminal as claimed in claim 5, wherein the data capacity of each of said packets is 32 bytes.

7. A terminal as claimed in claim 5 or 6, wherein the maximum value of said frame length is 16 packets.

8. A method of transmitting information from a mobile satellite communications terminal to a satellite earth station via a satellite, comprising:

 receiving from said satellite earth station signalling channel information indicating a frequency channel, a frame division and a timing reference signal;
 selecting one of a long slot length and a short slot length;
 determining a random or pseudo-random slot allocation; and
 transmitting said information in said frequency channel with a timing determined according to the timing reference signal, said frame division, the selected slot length and the slot allocation, such that the information is transmitted within a selected time slot within a frame synchronized with said timing reference signal and comprising a successive plurality of short time slots and a successive plurality of long time slots, the respective numbers of said long and short time slots being defined by said frame division, the information being transmitted either in one of said long time slots or in one of said short time slots according to the selection of a long slot length or a short slot length respectively, the individual one of said slots being determined by said slot allocation.

9. A method of receiving information from a plurality of mobile satellite communications terminals at a satellite earth station via satellite, comprising:

 transmitting to said terminals a timing reference signal and signalling channel information indicating a frequency channel and a frame division; and
 receiving said information from said terminals in said frequency channel in a format comprising a frame consisting of a successive plurality of long time slots and a successive plurality of short time slots, the respective number of said short and long time slots being dependent on said frame division, each of said slots containing a burst transmitted by one or more of said terminals.

10. A method of operating a mobile communications system comprising an earth station, a network coordination station, and a plurality of mobile terminals each able to communicate with said earth station and network coordination station via a satellite, the method comprising:

 storing at said earth station information identifying a registered group of said mobile terminals;
 storing a message including address information indicating a selected one of said mobile terminals;
 determining whether said selected mobile terminal is one of said registered group of mobile terminals;
 and, if said selected mobile terminal is not one of said registered group, sending a first message indication from said earth station to said network coordination station, said first message indication including an identity code identifying said selected mobile terminal;
 and, if said selected mobile terminal is one of said registered group, transmitting a second message indication from said earth station to said selected mobile terminal.

11. A method as claimed in claim 10, wherein, if said selected mobile terminal is one of said registered group, said second message indication comprises said message.

12. A method as claimed in claim 10, wherein, if said selected mobile terminal is one of said registered group, in response to said second message indication, said selected mobile terminal receives a message channel transmitted by said earth station, and said first earth station transmits said message to said selected mobile terminal on said message channel.

13. A method as claimed in claim 10, further comprising, if said selected mobile terminals is not one of said registered group,
 transmitting a channel command from said network coordination station to said selected mobile terminal,
 at the selected mobile terminal, in response to said channel command, receiving a channel transmitted by said earth station.

**14.** A method as claimed in claim 13, further comprising transmitting said message from said first earth station in said channel.

**15.** A method as claimed in claim 13, further comprising transmitting a message channel indication from said first earth station in said channel;

receiving a message channel at the selected mobile terminal, in response to said message channel indication; and

at the earth station, transmitting said message in said message channel.

**16.** A method of allocating respective transmission frequencies to a plurality of mobile terminals in a satellite communications system, comprising:

transmitting to a first group of mobile terminals a first common frequency channel containing first frequency channel information allocating a first group of successive frequency channels to said first group of mobile terminals; and

transmitting to a second group of mobile terminals a second common frequency channel containing second frequency channel information allocating a second group of successive frequency channels to said second group of mobile terminals;

wherein the minimum channel spacing between frequency channels within either of said first and second channel groups is less than the minimum channel spacing between any frequency channel of said first group and any frequency channel of said second group.

**17.** A method as claimed in claim 16, wherein said minimum channel spacing within each said group is 1.25 or 2.5 kHz.

**18.** A method as claimed in claim 16 or 17, wherein said minimum channel spacing between channels of said first and second group is 3.75 or 5 kHz.

**19.** A method of communication between a mobile terminal and a satellite earth station via a repeating satellite, comprising:

transmitting signals from said satellite earth station to said mobile terminal using a BPSK modulation scheme; and

receiving signals at said satellite earth station from said mobile terminal modulated using a n/2 BPSK modulation scheme.

**20.** A method of addressing a plurality of mobile terminals in a satellite earth station arranged to communicate with said mobile terminals via a satellite, comprising:

storing a plurality of arrays each containing a list of addresses of a group of said mobile terminals;

receiving a group identity code and a group index code;

selecting one of said arrays according to said group identity code and selecting one of the addresses within said selected array according to said group index code, and transmitting said selected address so as to be receivable by a selected one of the mobile terminals corresponding to said address; wherein the method further comprises:

receiving a message from one of said mobile terminals; and modifying the list of addresses of at least one of said arrays in response to said message.

**21.** A method of operating a messaging terminal for receiving messages from an earth station via a satellite, the method comprising:

transmitting to the earth station a sleep mode request;

receiving from the earth station a sleep mode allocation;

periodically entering a receiving state during which the messaging terminal is able to receive messages for a first period specified by said sleep mode allocation; and

periodically entering a non-receiving state during which the messaging terminal is not able to receive messages for a second period specified by said sleep mode allocation.

**22.** A method of operating an earth station for transmitting messages via a satellite to a messaging terminal, comprising:

receiving a sleep mode request from the mobile terminal;
in response to said request, transmitting a sleep mode allocation to said messaging terminal;
transmitting messages to said terminal within a repeating first period corresponding to said sleep mode allocation; and
inhibiting the transmission of messages to said terminal within a repeating second period corresponding to said sleep mode allocation.

## Fig. 1

# Fig. 2

**Mail client**

Message Entry & Display Functions — 14

12

**Mail server**

16 — Message Handling Sub-system

18 — Terrestrial Network Connection

Terrestrial Gateway — 20

Terrestrial Network

System Boundary

Message Handling Sub-system — 22

2

**LES**

Access & Control Sub-system — 24

Satellite Network

**MES DTE**

Message Entry & Display Functions

30

Message Handling Sub-system

**MES DCE**

Access & Control Sub-system

28

26

6

EP 1 429 474 A2

# Fig. 3

Fig. 4

Fig. 5

## Fig. 6

| Packets (from Access Layer) | | Packets (to Access Layer) | |
|---|---|---|---|
| **B** | Framing (padding) P10 | Packetisation P200 | **B** |
| **a** | Scrambling (bit-wise) P20 | De-scrambling (bit-wise) P190 | **a** |
| **s** | Encoding P30 | Decoding P180 | **s** |
| **e** | | | **e** |
| **b** | Add UW (if required) P40 | Remove UW (if required) P170 | **b** |
| **a** | Interleaving (If required) P50 | De-interleave (If required) P160 | **a** |
| **n** | | | **n** |
| **d** | Add Preambles P60 | Sync to Preamble P150 | **d** |
| | Transmit Timing P70 | Receive Timing P140 | |
| **RF** | Filtering P80 | Filtering P130 | **RF** |
| | Modulation P90 | Demodulation P120 | |
| | Up-conversion P100 | Down-conversion P110 | |
| | Transmitted Symbols | Received Symbols | |

## Fig. 7

F

8633.3 ms

DS      SS

EP      LP

Boundary

# Fig. 8

# Fig. 9

| Signals (from Datalink Layer) | Signals (to Datalink Layer) |
|---|---|
| Routing (channel selection) A10 | Routing A100 |
| Packetisation formatting A20 | Parameterisation A90 |
| Addition of Length Header A30 | Identification of Type A80 |
| Checksum Generation A40 | Checksum Validation A70 |
| *Signalling channel control* A50 | *Spot beam localisation* A60 |
| Packets (to Physical Layer) | Packets (from Physical Layer) |

## Fig. 10